# EUROPEAN PATENT SPECIFICATION

(11) **EP 4 735 762 B1**
(45) Date of publication and mention of the grant of the patent: **25.11.2026**
(21) Application number: 24740340.5
(22) Date of filing: 26.06.2024
(51) Int. Cl.: F03D 7/02, F03D 7/04

(54) **ACTIVATION OF WIND TURBINE PITCH CONTROL BASED ON RATE OF CHANGE OF WIND TURBINE COMPONENT OSCILLATION**
AKTIVIERUNG DER PITCH-STEUERUNG EINER WINDTURBINE AUF BASIS DER ÄNDERUNGSRATE DER SCHWINGUNG EINER WINDTURBINENKOMPONENTE
ACTIVATION DE COMMANDE DE PAS D'ÉOLIENNE SUR LA BASE DU TAUX DE CHANGEMENT D'OSCILLATION DE COMPOSANT D'ÉOLIENNE

(30) Priority: 27.06.2023 DK PA202370341
(43) Date of publication of application: 06.05.2026
(73) Proprietor: VESTAS WIND SYSTEMS A/S, 8200 Aarhus N (DK)
(72) Inventor: GILES, Alexander Duncan, 8200 Aarhus N (DK); MARTINS CUNHA, Bruno, 8200 Aarhus N (DK)
(74) Representative: Vestas Patents Department
(86) International application number: PCT/DK2024/050153
(87) International publication number: WO 2025/002523

(56) References cited:
- WO-A1-2018/171852
- WO-A1-2023/110040

## Description

### TECHNICAL FIELD

The invention relates to activation of a pitch controller of a wind turbine and, in particular, to activation of the pitch controller based on a rate of change of oscillation of a component, e.g. tower, of the wind turbine.

### BACKGROUND

Wind turbines as known in the art include a wind turbine tower supporting a nacelle and a rotor with a number of - typically, three - pitch-adjustable rotor blades mounted thereto. A wind turbine is prone to vibrations, such as tower, nacelle, or rotor blade movement. It is known that certain types of vibrations may be damped by active pitching of the rotor blades or adjusting generator torque. Control strategies for adjusting blade pitch can be used to maximise energy production of a wind turbine while minimising loads experienced by various components of the wind turbine.

Rotor blades may be adjusted as part of a collective pitch control routine, in which each of the (three) blades are adjusted in the same way at the same time. Collective pitch control may be used to control wind turbine speed, for instance. Rotor blades may also be adjusted as part of an individual pitch control routine, in which each blade has its own individual pitch reference, possibly as an adjustment to a collective pitch reference from a collective pitch controller. Collective and individual pitch control may be used to alleviate loads on components of the wind turbine, e.g. caused by rotational sampling of the wind field in the vicinity of wind turbine as the rotor rotates.

Continuous or excessive activation of a high-frequency collective or individual pitch controller may cause excessive wear of the pitch bearings. As such, collective and individual pitch control schemes may be combined with activation strategies that allow for certain key loading issues associated with wind turbine operation to be handled or addressed without putting excessive demands on the blade bearing.

WO 2023/110040 A1 discloses adjusting the pitch of wind turbine rotor blades to reduce fatigue of the wind turbine tower based on 3P frequency content of the tower. WO 2018/171852 A1 discloses damping the torsional oscillation of the tower based on filtering blade pitch command input signals to exclude frequency components greater than the torsional oscillation frequency.

There is a need to further improve collective and individual blade control to balance the alleviation of loads against ensuring excessive demands are not placed on the blade bearing.

It is against this background to which the present invention is set.

### SUMMARY OF THE INVENTION

According to an aspect of the present invention there is provided an activation controller for a wind turbine having a plurality of rotor blades. The activation controller is for controlling activation of a pitch controller that is for controlling pitch of the rotor blades. The activation controller is configured to receive a sensor signal, from at least one sensor of the wind turbine, indicative of oscillatory motion of a component of the wind turbine. The activation controller is configured to determine, based on the received sensor signal, a magnitude of the oscillatory motion of the component. The activation controller is configured to determine, based on the determined magnitude, a rate of change of the magnitude of oscillatory motion. The activation controller is configured to control activation of the pitch controller based on the determined rate of change of the magnitude of oscillatory motion.

The activation controller may be configured to activate the pitch controller if the determined rate of change is greater than zero. Optionally, the activation controller may be configured to deactivate the pitch controller if the determined rate of change is less than zero.

The activation controller may be configured to activate the pitch controller if the determined rate of change is greater than a threshold rate of change value that is greater than zero.

The activation controller may be configured to control activation of the pitch controller based on the determined magnitude of oscillatory motion of the component.

The activation controller may be configured to activate the pitch controller if the determined magnitude of oscillatory motion of the component is greater than a threshold magnitude value greater than zero. Optionally, the activation controller may be configured to deactivate the pitch controller if the determined magnitude of oscillatory motion of the component is less than a second threshold magnitude value. Further optionally, the second threshold magnitude value may be less than or equal to the threshold magnitude value.

The activation controller may be configured to activate the pitch controller if a predicted magnitude is greater than a defined predicted magnitude threshold value. The predicted magnitude may be a sum of the determined magnitude and the determined rate of change of the magnitude multiplied by a constant value.

The threshold magnitude value may be dependent on whether the wind turbine is operating in a full-load region or a partial-load region of a power curve of the wind turbine. Optionally, the threshold magnitude value may be greater when the wind turbine is operating in the partial-load region than in the load-load region.

The controller may be configured to isolate frequency content in the received sensor signal around a defined target frequency. The determined magnitude may be a magnitude of oscillatory motion around the defined target frequency. The magnitude may be determined based on the isolated frequency content. Optionally, the defined target frequency may be nP, where n is a positive integer.

To isolate the frequency content the controller may be configured to: generate, based on the received sensor signal, a pair of mutually orthogonal components based on the defined target frequency; and, apply one or more filters to each of the pair of mutually orthogonal components to isolate the frequency content around the defined target frequency. The magnitude of oscillatory motion may be determined based on the filtered pair of mutually orthogonal components.

The pair of mutually orthogonal components may be generated according to: $\left[\begin{matrix}D \\ Q\end{matrix}\right] = \left[\begin{matrix}cos \left({Ω}_{rot}t\right) \\ sin \left({Ω}_{rot}t\right)\end{matrix}\right] A$ where *D* and *Q* are the pair of mutually orthogonal components, *t* is time, *A* is the received sensor signal, and Ω*ᵣₒₜ* is the defined target frequency.

The controller may be configured to apply a filter to the pair of mutually orthogonal components prior to determining the magnitude. Alternatively, the controller may be configured to apply a filter to the determined magnitude prior to determining the rate of change of the magnitude. The filter may be a low pass filter. The filter may be a notch filter at 2Ω*ᵣₒₜ.*

The received sensor signal from the at least one sensor signal may be an acceleration signal from an acceleration sensor at a top of a tower of the wind turbine or in a nacelle of the wind turbine. The magnitude of the oscillatory motion of the component may be the magnitude of fore-aft oscillation of the tower or nacelle. The pitch controller may be a collective pitch controller for adjusting collective pitch of the plurality of rotor blades.

The wind turbine may comprise three rotor blades. The defined target frequency may be 3P. Optionally, the wind turbine may be an offshore wind turbine in which the tower is coupled to a floating platform.

The received sensor signal from the at least one sensor signal may be an acceleration signal from an acceleration sensor at a top of a tower of the wind turbine or in a nacelle of the wind turbine. The magnitude of the oscillatory motion of the component may be the magnitude of side-to-side oscillation of the tower or nacelle. The wind turbine may comprise three rotor blades. The defined target frequency may be 3P. The pitch controller may be a collective pitch controller for adjusting collective pitch of the plurality of rotor blades.

According to another aspect of the present invention there is provided a wind turbine comprising an activation controller as defined above.

According to another aspect of the present invention there is provided a method for a wind turbine having a plurality of rotor blades. The method is for controlling activation of a pitch controller that is for controlling pitch of the rotor blades. The method comprises receiving a sensor signal, from at least one sensor of the wind turbine, indicative of oscillatory motion of a component of the wind turbine. The method comprises determining, based on the received sensor signal, a magnitude of the oscillatory motion of the component. The method comprises determining, based on the determined magnitude, a rate of change of the magnitude of oscillatory motion. The method comprises controlling activation of the pitch controller based on the determined rate of change of the magnitude of oscillatory motion.

According to another aspect of the present invention there is provided a non-transitory, computer-readable storage medium storing instructions thereon that, when executed by one or more computer processors, causes the one or more computer processors to perform the method defined above.

### BRIEF DESCRIPTION OF THE DRAWINGS

Examples of the invention will now be described with reference to the accompanying drawings, in which:
Figure 1 is a schematic illustration of a wind turbine in accordance with an example of the invention;
Figure 2 schematically illustrates a control system of the wind turbine of Figure 1, the control system including an activation controller in accordance with an example of the invention;
Figure 3(a) is an illustrative plot of a frequency of vibrations of a tower of the wind turbine of Figure 1 in the fore-aft direction over time in an example in which the wind turbine of Figure 1 is part of a floating platform wind turbine system; Figure 3(b) illustratively plots a fast Fourier transform of the amplitude of the signals of Figure 3(a);
Figure 4 shows the steps of a method performed by the control system of Figure 2 in accordance with an example of the invention; and,
Figure 5 shows results obtained when the method of Figure 4 is performed for the floating platform wind turbine system example of Figure 3(a): in particular, Figure 5(a) shows mutually orthogonal components generated from the signal of Figure 3(a); Figure 5(b) shows low-pass filtered versions of the components of Figure 5(a); Figure 5(c) shows versions of the signals of Figure 5(b) that have been transformed back into an original frame of reference; and, Figure 5(d) shows a magnitude of isolated frequency content from the signal of Figure 3(a).

### DETAILED DESCRIPTION

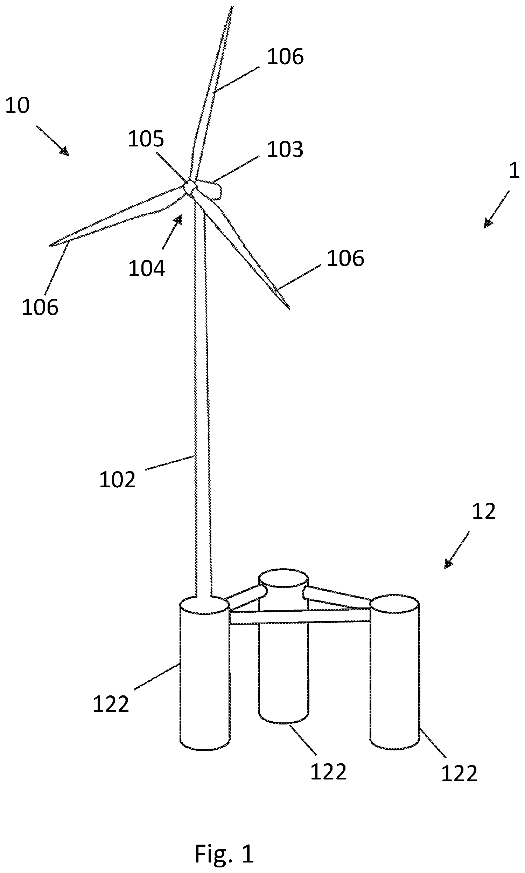

Figure 1 illustrates, in a schematic view, an example of a wind turbine 10. The wind turbine 10 includes a tower 102, a nacelle 103 disposed at the apex of, or atop, the tower 102, and a rotor 104 operatively coupled to a generator housed inside the nacelle 103. In addition to the generator, the nacelle 103 houses other components required for converting wind energy into electrical energy and various components needed to operate, control, and optimise the performance of the wind turbine 10. The rotor 104 of the wind turbine 10 includes a central hub 105 and three rotor blades 106 that project outwardly from the central hub 105. Moreover, the wind turbine 10 comprises a control system including one or more controllers (not shown in Figure 1). The controller(s) may be placed inside the nacelle 103, in the tower 102 or distributed at a number of locations inside (or externally to) the turbine 10 and communicatively connected to one another. The rotor blades 106 are pitch-adjustable. The rotor blades 106 can be adjusted in accordance with a collective pitch setting, where each of the blades are set to the same pitch value. Optionally, the rotor blades 106 may be adjustable in accordance with individual pitch settings, where each blade 106 may be provided with an individual pitch setpoint.

In the described example, the wind turbine 10 is part of a floating platform wind turbine system 1. The floating system 1 may be (part of) an offshore wind turbine installation, i.e. an installation located away from land in the ocean or sea. In addition to the wind turbine 10, the floating system 1 includes a floating platform 12. The floating platform 12 may be attached to the ground, e.g. the sea bed, in any suitable manner. In particular, there are various different types of floating platform designs or concepts, including so-called tripod, tension-leg platform (TLP), semi-submersible, and spar platforms. Figure 1 illustrates an example in which the floating platform is of semi-submersible type, having has three pillars 122 (partially submerged in water) and tethers for mooring. It will be understood that different numbers of pillars and/or tethers may be used, and that different types of floating platforms may be used. The wind turbine tower 102 is coupled to the platform 12. In some examples, more than one tower may be coupled to the platform 12, such as two or more towers.

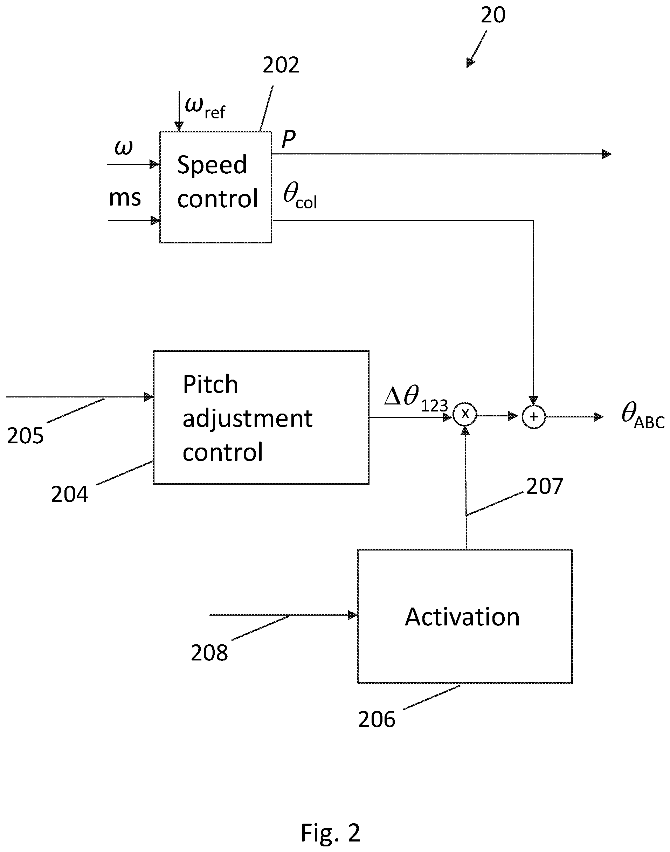

Figure 2 schematically illustrates elements of a control system or overall controller 20 (of the wind turbine 10) that includes a (feedback) speed controller or control block 202 of the overall controller 20 implemented to determine collective pitch actuation signals for controlling pitch of the rotor blades 106. In the illustrated implementation, the speed controller 202 minimises a speed error (*ω* - *ω*_{ref}) between the actual rotor speed, *ω*, and a reference rotor speed, *ω*_{ref}, in order to output a requested power *P* (in the form of a power setpoint) and a collective pitch reference, *θ*_{col}. The collective pitch reference as determined by the speed controller 202, in view of the rotor speed, may also take further sensor values into account. This is referred to in Figure 2 as a measurement set, ms, being input into the speed controller 202. The feedback speed controller 202 may be implemented by a PI (proportional-integral), PID (proportional-integral-derivative), or similar control scheme. In one example, the speed controller 202 may alternatively be a model predictive controller which, based on minimising a cost function, is arranged to determine the collective pitch reference and/or the power reference.

Figure 2 further illustrates a control block or controller 204 of the overall controller 20, which may be referred to as a pitch adjustment controller or, simply, pitch controller. In the pitch controller 204, a pitch modification signal, or pitch reference offset value, Δθ₁₂₃ is determined based on one or more input signals 205. The input signals 205 and operation of the pitch controller 204 in various different examples is described in greater detail below. The offset value Δθ₁₂₃ is superimposed onto the collective pitch reference *θ*_{col} to provide a resulting or overall pitch reference or modification signal θ_{ABC} that can be applied to the pitch actuators of the rotor blades 106.

In some examples, the pitch controller 204 is a collective pitch controller in which the offset value Δθ₁₂₃ is applied to the collective pitch reference *θ*_{col} to adjust the pitch of each of the three rotor blades 106 in the same way at the same time. In other examples, the pitch controller is an individual pitch controller in which the offset value Δθ₁₂₃ includes three adjustment/offset signals, one for each of the three rotor blades 106, which are applied to the collective pitch reference *θ*_{col} for each of the rotor blades 106 to adjust the rotor blades 106 in an individual manner. Typically, the wind turbine 10 may include a plurality of pitch adjustment controllers - such as the pitch controller 204 - which can include one or more collective pitch controllers and/or one or more individual pitch controllers.

The controller 20 transmits the pitch reference signal to pitch actuators to control pitch angle of the rotor blades 106 in accordance with the pitch signal.

The described control system 20 may be in the form of any suitable computing device, for instance one or more functional units or modules implemented on one or more computer processors. Such functional units may be provided by suitable software running on any suitable computing substrate using conventional or custom processors and memory. The one or more functional units may use a common computing substrate (for example, they may run on the same server) or separate substrates, or one or both may themselves be distributed between multiple computing devices. A computer memory may store instructions for performing the methods performed by the controller, and the processor(s) may execute the stored instructions to perform the method.

The pitch controller 204 is used to alleviate loads on components of the wind turbine 10 by modifying a collective or individual pitch reference for the rotor blades 106. However, constant or frequent use of such a pitch controller 204 to adjust rotor blade pitch can result in excessive wear of the pitch bearings. It is known to implement an activation strategy to activate or deactivate a pitch controller as desired or needed so as to alleviate component loading while not causing excessive wear of the pitch bearings.

Referring again to Figure 2, the overall controller 20 further includes an activation controller or control block 206. The activation controller 206 is for determining when the pitch controller 204 is to be activated, i.e. when the output Δθ₁₂₃ of the pitch controller 204 is to be applied to the collective pitch reference *θ*_{col} from the speed controller 202 to obtain the overall pitch reference θ_{ABC} used to control blade pitch.

In one implementation, the output 207 of the activation controller 206 is a binary output that is then applied to / multiplied with the output Δθ₁₂₃ of the pitch controller 204 before it is combined with the collective pitch reference *θ*_{col} from the speed controller 202. In particular, when the pitch controller 204 is to be activated then the activation controller output 207 may be one, whereas when the pitch controller 204 is to be deactivated then the activation controller output 207 may be zero. In some examples, the activation controller 206 may be capable of gain adjusting the output Δθ₁₂₃ of the pitch controller 204 such that the activation controller output 207 may be values other than zero or one. The specific determinations performed by the activation controller 206, and the inputs 208 on which these determinations are based, is described in detail below.

The present invention recognises that certain operating points of a wind turbine lead to resonance vibration of certain components of the wind turbine, which in turn leads to higher component loading such that the lifespan of the component is reduced. The present invention advantageously identifies these problematic operating points associated with resonance vibration of certain components, and implements an activation strategy for a pitch controller configured to alleviate loads on these certain components, the activation strategy aiming to limit operation of the wind turbine at an operating point that is associated with vibration resonance of the component.

The present invention is particularly directed to wind turbine component resonance vibrations that have a frequency that clashes with, or is near to, nP peaks. Operation of a wind turbine where a relevant nP peak is close to a resonant mode of a wind turbine component is problematic as it can result in excessive excitation of a natural mode. An nP peak may be regarded as a point of maximum amplitude of an nP frequency signal. Here, n is a positive integer, and 1P is the rotational frequency of the wind turbine rotor, i.e. the time period for one complete period of the rotor to be completed. For a wind turbine with three rotor blades, such as the wind turbine 10 described herein, 3P is the blade passing frequency (i.e. the frequency at which one of the rotor blades passes the wind turbine tower 102).

In the floating platform wind turbine system 1 of the described example, a natural vibration frequency may be a coupled mode between the tower 102 and the platform 12 on which the wind turbine 10 floats. The (second) coupled mode frequency of the floating system and the 3P frequency in the tower may be close to one another or may even intersect, particularly when the rotor is close to the nominal rotor speed, e.g. when the rotor speed is at an upper end of partial load operation, and for all of full-load operation, of the wind turbine. In general, the margin between coupled mode and tower 3P frequencies is typically relatively small, and typically less than 15 percent when the rotor is rotating at nominal speed. This can cause relatively high levels of fatigue in the tower of a floating platform wind turbine system, which can significantly reduce the lifespan of the tower.

As the oscillation to be targeted in this example is in the tower fore-aft direction, a collective pitch controller can be used to mitigate this issue (around 3P), but constant or frequent operation of such a pitch controller would be prohibitively expensive on the pitch bearings. As an alternative, a cyclic / individual pitch controller can be used to mitigate this issue. In particular, this may be a pitch controller targeting frequencies near to the tower mode frequency minus 1P (which becomes close to 2P when the tower mode frequency is at or close to 3P). Again, repeated operation of such a pitch controller would be prohibitively expensive on the pitch bearings

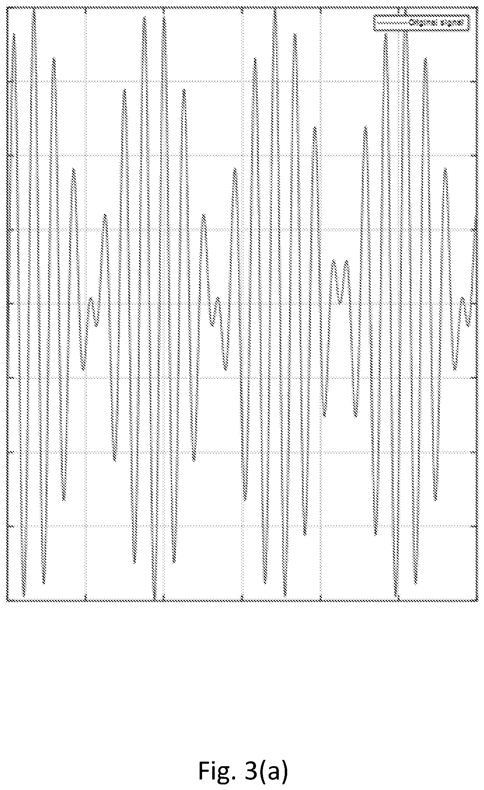

Figure 3(a) is an illustrative plot of a frequency of tower vibration in the fore-aft direction over time in the case of a floating platform wind turbine system as described above. In particular, in the illustrated example the coupled mode frequency of the floating system and the 3P frequency in the tower 102 are in close proximity to one another. It is seen that during certain periods the coupled mode and 3P frequency signals combine to give fore-aft tower oscillations with relatively large amplitudes, in particular when the two signals are essentially in phase and constructive interference occurs. On the other hand, these 'in phase' periods are followed by periods in which the coupled mode and 3P frequency signals combine to give fore-aft tower oscillations with relatively small amplitudes, in particular when the two signals are essentially out of phase and destructive interference occurs.

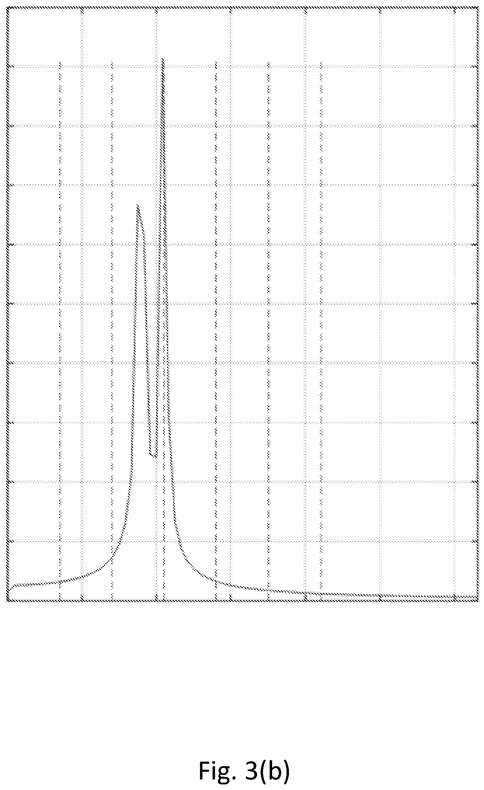

This illustrates an example in which the coupled mode and 3P frequency signals drift in and out of phase. The drift occurs at a frequency that is the difference between the two frequency signals. For instance, if the coupled mode frequency is 0.9*3P=2.7P, then the drift phenomenon between the coupled mode and 3P frequencies occurs at 3P-2.7P=0.3P. Figure 3(b) illustratively plots a fast Fourier transform of the amplitude of the signals of Figure 3(a), which indicates that the coupled mode and 3P frequencies are in relatively close proximity to one another.

In the present invention, it is beneficially recognised that when destructive interference is occurring the system is being damped naturally, and so the need for active pitch control to target the tower oscillations is significantly lower than when constructive interference is occurring. Time intervals in which destructive interference is occurring have the characteristic of a negative rate of change of magnitude of the combined signal (of the coupled mode and 3P frequencies) with respect to time. On the other hand, it is recognised that when constructive interference is occurring the system is being naturally excited, and so there is a greater need for a pitch controller, e.g. the pitch controller 204, to provide additional damping of the oscillations.

The present invention therefore beneficially provides a method and system in which a pitch controller for mitigating resonance is activated (and deactivated) based on a rate of change (i.e. derivative with respect to time) of the frequency content being targeted by the pitch controller, e.g. fore-aft tower oscillations in the floating turbine example described above. In this way, the pitch controller can be activated when it is most needed to alleviate component loading, i.e. when component oscillations are increasing in magnitude, but deactivated when there is natural damping so as to guard against excessive wear of the pitch bearings. Specifically, by activating a pitch controller based on the rate of change of oscillation of a wind turbine component, pitch control to dampen the oscillations can be initiated prior to the oscillation reaching a large or peak value, i.e. at or near to the onset of constructive interference, meaning that the most problematic loading cases of the component (associated with oscillations of significant magnitude) can be avoided as the damping effect of the pitch controller occurs prior to oscillations with large magnitude occurring.

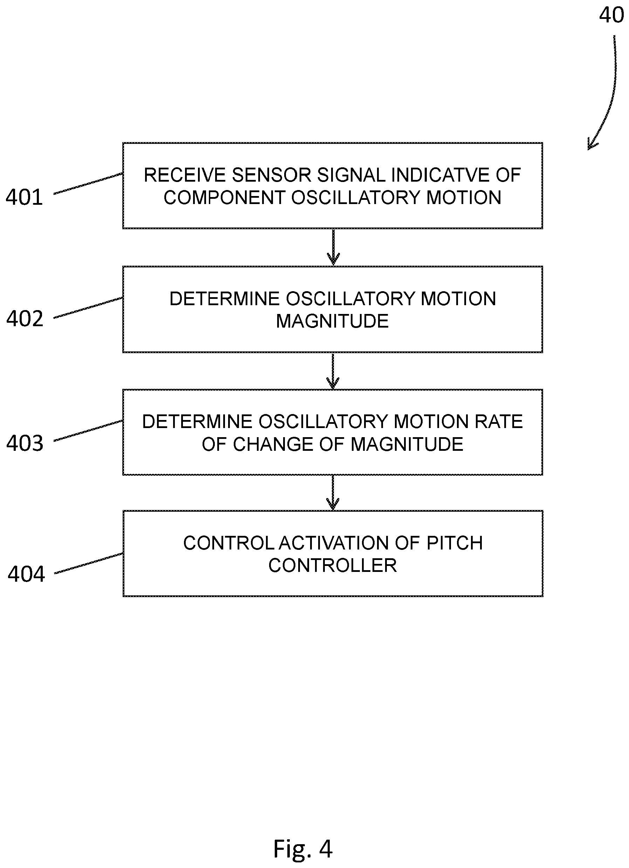

Figure 4 shows the steps of a method 40 performed by the controller 20 in accordance with the invention. At step 401, the activation controller 206 receives the sensor signal 208, from at least one sensor of the wind turbine 10, indicative of oscillatory motion of a component of the wind turbine 10. The component may be the component whose oscillations are to be targeted/dampened by the pitch controller 204. Alternatively, the component whose oscillatory motion is being measured may be used as a proxy for oscillatory motion of another wind turbine component that this to be targeted/dampened by the pitch controller 204.

Different types of sensors can be used depending on the wind turbine component being monitored. In the example described above in which fore-aft tower oscillation is monitored, one or more accelerometers positioned in the nacelle 103 and/or at the top of the tower 102 may be used to measure the oscillatory motion. Such accelerometers can also be used in examples in which tower motion in a different direction, e.g. side-to-side motion, is being monitored. In examples in which oscillatory motion of the rotor blades 106 in one or more directions is being monitored, then the sensors may include one or more blade load sensors positioned at or near a root of the rotor blades 106 and that are configured to measure movement in an edgewise and/or flapwise direction.

At step 402, the method 40 involves determining, based on the sensor signal received at step 401, a magnitude of the oscillatory motion of the component, e.g. the tower 102. A high-pass filter may be applied to the received sensor signal prior to determining the magnitude. It may be desired to consider the magnitude of the received signal around a certain frequency, e.g. a frequency around which constructive interference between frequency content of two signals of the wind turbine 10 occurs, such as between the tower-platform coupled mode and 3P in the example outlined above.

As such, the method 40 may involve isolating frequency content in the received (and possibly high-pass filtered) sensor signal around a specific frequency of interest (defined target frequency), and then determining the magnitude of this isolated frequency content. The present invention is particularly directed to targeting vibration resonance modes around nP. A such, frequency content around the relevant nP for the specific mode to be targeted may be isolated in the received sensor signal. For the floating platform wind turbine system described above, frequency content around 3P may therefore be isolated.

In some examples, the frequency content around the relevant nP (or other frequency) may be isolated by first generating, from the received sensor signal, a pair of mutually orthogonal components based on the defined target frequency. For instance, this may be implemented by applying the following operation to the received sensor signal: $\left[\begin{matrix}D \\ Q\end{matrix}\right] = \left[\begin{matrix}cos \left({Ω}_{rot}t\right) \\ sin \left({Ω}_{rot}t\right)\end{matrix}\right] A$ where *D* and Q are the pair of mutually orthogonal components, *t* is time, *A* is the received sensor signal, and Ω*ᵣₒₜ* is the defined target frequency (e.g. the rotation frequency of interest, such as 3P).

For each frequency in the received sensor signal (original signal), this will generate a pair of frequencies in each of the D and Q channels. In particular, the frequencies will be the original frequency plus the defined target frequency and the original frequency minus the defined target frequency. In an example in which the defined target frequency is 3P (i.e. Ω*ᵣₒₜ*=3P), 3P content in the original signal will therefore produce a 0P signal and a 6P signal. In the floating platform wind turbine system example, the coupled mode frequency - which is close to 3P, at least at certain operating points - will produce output content at ~0P and ~6P.

As mentioned, for a given frequency input, for each of the two output frequencies that is produced, the D and Q channels are mutually orthogonal. As an example, for 3P content in the original signal, the resulting 6P content in the D channel is orthogonal to the resulting 6P content in the Q channel, and the resulting 0P content in the D channel is orthogonal to the resulting 0P content in the Q channel. Similarly, for the resonant mode component in the original signal, the resulting ~6P content in the D channel is orthogonal to the resulting ~6P content in the Q channel, and the resulting ~0P content in the D channel is orthogonal to the resulting ~0P content in the Q channel.

The orthogonality of content around 0P means that the magnitude of the content local to nP (nP plus the resonant mode), e.g. 3P in the described example, can then be estimated accurately with almost no delay (relative to some other ways in which the magnitude may be calculated, e.g. a leaky integrator approach). Also, the orthogonality means that all of the frequency content away from 0P may be filtered out. This can be achieved by applying a low-pass filter to the D and Q channels, e.g. a second order low pass filter.

In the described example, the following operation is then performed: $\left[\begin{matrix}{D}_{n} \\ {Q}_{n}\end{matrix}\right] = 2 \left[\begin{matrix}cos \left({Ω}_{rot}t\right) & sin \left({Ω}_{rot}t\right) \\ - sin \left({Ω}_{rot}t\right) & cos \left({Ω}_{rot}t\right)\end{matrix}\right] \left[\begin{matrix}{D}_{filt} \\ {Q}_{filt}\end{matrix}\right]$ where *D_{filt}* and *Q_{filt}* are the orthogonal signals with the low-pass filter applied, and *Dₙ* and *Qₙ* are components back in the original/normal frame of reference. This operation to return the components back to the normal frame of reference is not essential for determining the magnitude of the received signal for its purposes in the present context. The magnitude could instead be determined based on the mutually orthogonal signals in the D and Q channels. However, the factor of 2 would still be applied. This is because the above operation to generate the mutually orthogonal components in the first instance splits the magnitude in half, and so this needs to be accounted for before determining the magnitude below.

In a different context in which the determined magnitude was to be used as part of a control sequence, for instance, rather for determining activation of a pitch controller as in the present context, then the operation to return the components back to the normal frame of reference may indeed be performed.

In the described example, the magnitude of the frequency content local to the specific target frequency, e.g. nP (such as 3P), may be determined according to: ${Mag}^{2} = {D}_{n}^{2} + {Q}_{n}^{2}$ and solving for the positive root of the magnitude *Mag.*

Optionally, a (further) filter may be applied at this stage, which for instance may be a low-pass filter or a notch filter at 2Ω*ᵣₒₜ.* If the (first) low-pass filter above removed all of the 2Ω*ᵣₒₜ* content, then the determined magnitude will be driven only by a dc term. However, if the first low-pass filter has not completely removed the 2Ω*ᵣₒₜ* content, then imperfections/oscillations may be present in the determined magnitude. The optional application of the further filter to the determined magnitude at this stage may therefore clean up the magnitude signal to remove such imperfections/oscillations. This may be considered more important in the present context, as the time derivative of the magnitude is to be determined, which may amplify any imperfections/oscillations in the magnitude signal. Preferably, the (first) low-pass filter removes substantially all of the 2Ω*ᵣₒₜ* content such that the (further) filter at this stage is not needed.

Returning to Figure 4, the time derivative of the determined magnitude is calculated at step 403 of the method 40 to obtain a rate of change of magnitude of the oscillatory motion of the wind turbine component being monitored.

At step 404, the method 40 involves controlling activation of the pitch controller 204 based on the determined rate of change of the magnitude of oscillatory motion. The activation is controlled via the output 207 of the activation controller 206, e.g. a binary output to be applied to the output of the pitch controller 204.

In one example, the activation controller 206 is configured to activate the pitch controller 204 (e.g. by setting the output 207 of the activation controller 206 to one) if the determined rate of change of magnitude is greater than zero. Such an activation scheme would ensure that the pitch controller 204 is activated to alleviate component loading as the component oscillations start to increase in magnitude, i.e. as the two component signals (e.g. the coupled mode and 3P) begin to come into phase (i.e. begin to constructively interfere). Correspondingly, the activation controller 206 may then be configured to deactivate the pitch controller 204 when the rate of change of magnitude becomes negative (less than zero).

In different examples, a different threshold value, i.e. other than zero, may be implemented as the rate of change value at which the pitch controller 204 is activated. For instance, setting the threshold value to be a value greater than zero may beneficially introduce a degree of tolerance to the scheme to avoid repeated activations and deactivations. In general, however, a defined threshold value for the rate of change of magnitude at which the pitch controller 204 is activated will be a static/constant threshold. Hysteresis between activation and deactivation thresholds of the rate of change of magnitude may be introduced to avoid repeated activation and deactivation around certain operating points.

In important examples of the invention, activation of the pitch controller 204 is controlled on the determined magnitude of the received oscillatory motion signal (in addition to the rate of change of the magnitude). For instance, the activation controller 206 may be configured to activate the pitch controller 204 if the determined rate of change of magnitude is greater than the defined (rate of change of magnitude) threshold value (e.g. zero or a value greater than zero) and the determined magnitude is greater than a threshold magnitude value. By making the activation additionally dependent on the value of the magnitude, the pitch controller 204 can be controlled to alleviate component loading only when the component oscillations are of relatively high magnitude (i.e. when fatigue, wear, etc. of the component is most likely to occur), thereby limiting the wear of the pitch bearing by implementing the pitch controller 204 only when it is most needed. The pitch controller 204 may be deactivated when the magnitude falls below a further (second) threshold value that is less than the activation threshold value. Such hysteresis beneficially guards against repeated activation and deactivation of the pitch controller 204.

The defined threshold magnitude value may be a dynamic value, i.e. it may vary/change based on operating point/conditions. For instance, the threshold magnitude value may be defined to be a different value depending on whether the wind turbine 10 is operating in a full-load region or a partial-load region of a power curve of the wind turbine 10. For instance, as mentioned above, in the floating platform wind turbine system example the coupled mode frequency is more likely to coincide with 3P frequency content when the wind turbine 10 is operating close to, or at, its nominal generator speed, i.e. when the wind turbine 10 is operating in or near to the full-load region. It may therefore be more beneficial for the pitch controller in this example to be activated more of the time in the full-load region (compared to the partial-load region). As such, in this example the threshold magnitude value may be lower when the wind turbine 10 is in the full-load region compared to when it is in the partial-load region.

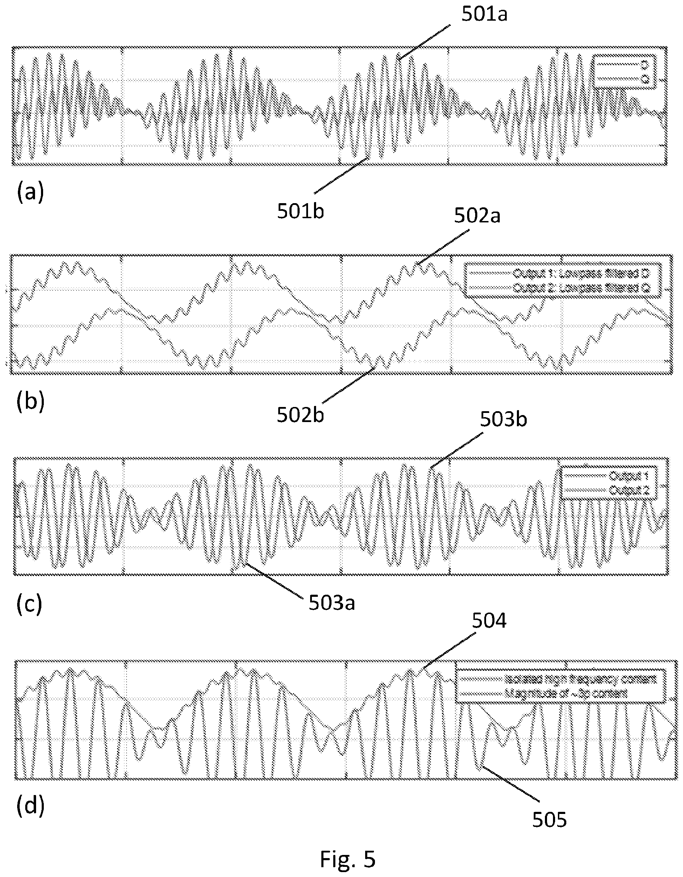

Figures 5(a) to 5(d) show plots illustrating the signal components determined based on the fore-aft tower oscillation signal of Figure 3(a) in the floating platform wind turbine system example in the manner described above. In particular, Figure 5(a) shows the mutually orthogonal components *D* 501a and *Q* 501b determined from the received/original signal as described above. Figure 5(b) shows the low-pass filtered versions of the components *D_{filt}* 502a and *Q_{filt}* 502b. Figure 5(c) shows the outputs *Dₙ* 503a and *Qₙ* 503b back in the original frame of reference. Figure 5(d) then shows the determined/extracted magnitude 504 of the (isolated) frequency content 505 (i.e. the content close to 3P) in the received signal.

As is apparent from Figure 5(d), there are oscillations in the magnitude signal 504 both on a relatively short timescale and on a longer timescale. The longer timescale oscillations are indicative of the received signals drifting in and out of phase. As such, it is desired for the pitch control activation to be scheduled based on these longer timescale magnitude oscillations (in particular, the rate of change and optionally absolute value thereof). On the other hand, it is less desirable for the pitch control activation to react to the shorter timescale oscillations, and the thresholds on the rate of change and optionally absolute values could be set in an appropriate manner such that this is achieved.

Many modifications may be made to the described examples without departing from the scope of the appended claims.

In the above description, an example in which activation of pitch control to reduce tower fore-aft oscillation magnitude in a floating turbine system is described. Another example in which the described method for activating pitch control may be used is for controlling edgewise whirling content caused by edgewise vibrations of the rotor blades. This may occur in a floating turbine system as illustrated in Figure 1, or in an on-shore wind turbine arrangement in which the wind turbine is fixed to the ground. When the rotor of a wind turbine is turning, oscillations of the blades relative to their edgewise axes can cause movement of the blade in the same plane as the plane of rotation of the rotor. It will be appreciated that the rotor shaft is effectively mounted at one of its ends and is unsupported at the hub end where the blades are attached. As edgewise oscillation of the blades excites the rotor with a force that is transverse to its longitudinal axis, then in resonant conditions this may result in the rotational axis of the rotor shaft describing an erratic pattern of motion. This phenomenon may be referred to as 'whirling'.

The phase differences between the edgewise oscillations of the blades determines whether whirling occurs in the same direction as the rotor rotation, which may be referred to as 'forward whirl' or a 'forward whirling mode', or whether whirling occurs in a direction opposite to that of the rotor rotation, which may be referred to as 'backward whirl' or a 'backward whirling mode'.

Whirling of the rotor shaft imparts lateral forces to the nacelle via the rotor and therefore causes it to sway from side to side. This motion is detectable by monitoring the behaviour of the nacelle or upper portion of the tower, and motion above a certain level may be regarded as indicative of the rotor blades oscillating unacceptably in the edgewise direction. This motion can be used to identify and quantify blade edgewise vibrations and take mitigating action.

As such, individual pitch control to target whirling content may be based on side-to-side oscillations of a wind turbine tower, e.g. a tower side-to-side acceleration signal. In this example, a natural mode of forward whirl may occur close to 6P. Therefore, in the activation method 40 described above, the rotation frequency of interest (defined target frequency) Ω*ᵣₒₜ* may be set to 6P in order to isolate frequency content in the tower side-to-side acceleration signal.

Alternatively, the defined target frequency could be set based on the frequency of the whirling content. For instance, backward whirling may appear at an edge frequency minus 1P, and forward whirling may appear at the edge frequency plus 1P. Here, the edge frequency may be regarded as a known parameter that may be accessed via a look-up table or similar in a memory module. The edge frequency may, however, be specific to a specific wind turbine structure but change for different operating points of the wind turbine. The defined target frequency Ω*ᵣₒₜ* may therefore be set to the edge frequency minus 1P or the edge frequency plus 1P in some examples.

The method 40 may then be applied as described above to activate pitch control to target whirling content when the rate of change of the magnitude of the side-to-side tower vibrations is above a defined threshold (and optionally the magnitude of the side-to-side tower vibrations is above a defined magnitude threshold), for the isolated frequency content.

It will be understood that activation of pitch control in accordance with the method described herein may be used in various use cases for targeting different frequency modes and component vibrations of a wind turbine. For instance, an example in which the described method may be used for controlling activation of individual pitch control is for tilt-yaw control based on blade load sensor signals. In particular, a 1P cyclic pitch controller may be used for targeting 0P frequency content in a fixed reference frame, and a 2P cyclic pitch controller may be used for targeting 3P frequency content in a fixed reference frame.

In the examples described above, activation of (high frequency) collective or individual pitch control is based on the rate of change of the magnitude of oscillatory motion relative to a defined threshold, and optionally also based on the magnitude of oscillatory motion relative to a defined threshold. In different examples, the activation may be based on a so-called 'predicted magnitude' of the oscillatory motion of interest. The predicted magnitude is a combination of the determined magnitude of oscillatory motion and the determined rate of change of oscillatory motion. For instance, the predicted magnitude may be defined as the sum of the determined (current) magnitude and the determined rate of change of magnitude multiplied by a defined projection time, i.e. *Mag_{predict}* = *Mag_{current} + Deriv* * *ProjectionTime,* where *Deriv* is the rate of change (derivative with respect to time) of the magnitude. The determination as to whether to activate the (high frequency) collective or individual pitch control may then be based on the predicted magnitude relative to a defined threshold. In particular, the described activation controller may be configured to activate the relevant pitch controller if the determined predicted magnitude is greater than the defined threshold value. The projection time is a defined fixed/constant value and is defined in seconds. The projection time may for instance to be set to be less than one second.

## Claims

1. An activation controller (206) for a wind turbine (10) having a plurality of rotor blades (106), the activation controller being for controlling activation of a pitch controller (204) that is for controlling pitch of the rotor blades, the activation controller being configured to:
receive a sensor signal (208), from at least one sensor of the wind turbine, indicative of oscillatory motion of a component (102, 103) of the wind turbine;
determine, based on the received sensor signal, a magnitude of the oscillatory motion of the component; **characterized in that** the activation controller is further configured to:
determine, based on the determined magnitude, a rate of change of the magnitude of oscillatory motion; and,
control activation of the pitch controller based on the determined rate of change of the magnitude of oscillatory motion.

2. An activation controller (206) according to Claim 1, wherein the activation controller is configured to activate the pitch controller (204) if the determined rate of change is greater than zero; optionally, wherein the activation controller is configured to deactivate the pitch controller if the determined rate of change is less than zero.

3. An activation controller (206) according to Claim 2, wherein the activation controller is configured to activate the pitch controller (204) if the determined rate of change is greater than a threshold rate of change value that is greater than zero.

4. An activation controller (206) according to any previous claim, the activation controller being configured to control activation of the pitch controller (204) based on the determined magnitude of oscillatory motion of the component (102, 103).

5. An activation controller (206) according to Claim 4, wherein the activation controller is configured to activate the pitch controller (204) if the determined magnitude of oscillatory motion of the component (102, 103) is greater than a threshold magnitude value greater than zero; optionally, wherein the activation controller is configured to deactivate the pitch controller if the determined magnitude of oscillatory motion of the component is less than a second threshold magnitude value; further optionally, wherein the second threshold magnitude value is less than or equal to the threshold magnitude value.

6. An activation controller (206) according to Claim 5, wherein the threshold magnitude value is dependent on whether the wind turbine (10) is operating in a full-load region or a partial-load region of a power curve of the wind turbine; optionally, wherein the threshold magnitude value is greater when the wind turbine is operating in the partial-load region than in the full-load region.

7. An activation controller according to Claim 1, wherein the activation controller (206) is configured to activate the pitch controller (204) if a predicted magnitude is greater than a defined predicted magnitude threshold value, wherein the predicted magnitude is a sum of the determined magnitude and the determined rate of change of the magnitude multiplied by a constant value.

8. An activation controller (206) according to any previous claim, the activation controller being configured to isolate frequency content in the received sensor signal (208) around a defined target frequency, wherein the determined magnitude is a magnitude of oscillatory motion around the defined target frequency, the magnitude being determined based on the isolated frequency content; optionally, wherein the defined target frequency is nP, where n is a positive integer.

9. An activation controller (206) according to Claim 8, wherein to isolate the frequency content the activation controller is configured to:
generate, based on the received sensor signal (208), a pair of mutually orthogonal components based on the defined target frequency; and,
apply one or more filters to each of the pair of mutually orthogonal components to isolate the frequency content around the defined target frequency,
wherein the magnitude of oscillatory motion is determined based on the filtered pair of mutually orthogonal components.

10. An activation controller (206) according to Claim 9, wherein the pair of mutually orthogonal components are generated according to: $\left[\begin{matrix}D \\ Q\end{matrix}\right] = \left[\begin{matrix}cos \left({Ω}_{rot}t\right) \\ sin \left({Ω}_{rot}t\right)\end{matrix}\right] A$ where *D* and Q are the pair of mutually orthogonal components, *t* is time, *A* is the received sensor signal, and Ω*ᵣₒₜ* is the defined target frequency; optionally wherein the activation controller is configured to apply a filter to the determined magnitude prior to determining the rate of change of the magnitude, wherein the filter is: a low pass filter; or, a notch filter at 2Ω*ᵣₒₜ*.

11. An activation controller (206) according to any previous claim, wherein the received sensor signal from the at least one sensor signal is an acceleration signal from an acceleration sensor at a top of a tower (102) of the wind turbine (10) or in a nacelle (103) of the wind turbine, wherein the magnitude of the oscillatory motion of the component is the magnitude of fore-aft oscillation of the tower or nacelle, and wherein the pitch controller (204) is a collective pitch controller for adjusting collective pitch of the plurality of rotor blades (106).

12. An activation controller (206) according to Claim 11 when dependent on Claim 8, wherein the wind turbine (10) comprises three rotor blades (106), and wherein the defined target frequency is 3P; optionally, wherein the wind turbine is an offshore wind turbine in which the tower (102) is coupled to a floating platform (12).

13. An activation controller (206) according to any of Claims 8 to 10, wherein the received sensor signal from the at least one sensor signal is an acceleration signal from an acceleration sensor at a top of a tower (102) of the wind turbine (10) or in a nacelle (103) of the wind turbine, wherein the magnitude of the oscillatory motion of the component is the magnitude of side-to-side oscillation of the tower or nacelle, wherein the wind turbine comprises three rotor blades, wherein the defined target frequency is 6P, and wherein the pitch controller (204) is a collective pitch controller for adjusting collective pitch of the plurality of rotor blades (106).

14. A wind turbine (10) comprising an activation controller (206) according to any previous claim.

15. A method for a wind turbine (10) having a plurality of rotor blades (106), the method being for controlling activation of a pitch controller (204) that is for controlling pitch of the rotor blades (106), the method comprising:
receiving a sensor signal (208), from at least one sensor of the wind turbine, indicative of oscillatory motion of a component (102, 103) of the wind turbine;
determining, based on the received sensor signal, a magnitude of the oscillatory motion of the component; **characterized in that** the method further comprising:
determining, based on the determined magnitude, a rate of change of the magnitude of oscillatory motion; and,
controlling activation of the pitch controller based on the determined rate of change of the magnitude of oscillatory motion.

## Patentansprüche

1. Aktivierungssteuerung (206) für eine Windturbine (10), welche eine Vielzahl von Rotorblättern (106) aufweist, wobei die Aktivierungssteuerung die Aktivierung einer Pitch-Steuerung (204) steuert, die zur Steuerung des Pitches der Rotorblätter dient, wobei die Aktivierungssteuerung konfiguriert ist, zum:
Empfangen eines Sensorsignals (208) von mindestens einem Sensor der Windturbine, das auf eine Schwingungsbewegung einer Komponente (102, 103) der Windturbine hinweist;
Bestimmen, auf Basis des empfangenen Sensorsignals, einer Größe der Schwingungsbewegung der Komponente; **dadurch gekennzeichnet, dass** die Aktivierungssteuerung ferner konfiguriert ist, zum:
Bestimmen, auf Basis der ermittelten Größe, einer Änderungsrate der Größe der Schwingungsbewegung; und
Steuern der Aktivierung der Pitch-Steuerung basierend auf der bestimmten Änderungsrate der Größe der Schwingungsbewegung.

2. Aktivierungssteuerung (206) nach Anspruch 1, wobei die Aktivierungssteuerung so konfiguriert ist, dass sie die Pitch-Steuerung (204) aktiviert, wenn die ermittelte Änderungsrate größer als Null ist; optional wobei die Aktivierungssteuerung so konfiguriert ist, dass sie die Pitch-Steuerung deaktiviert, wenn die ermittelte Änderungsrate kleiner als Null ist.

3. Aktivierungssteuerung (206) nach Anspruch 2, wobei die Aktivierungssteuerung so konfiguriert ist, dass sie die Pitch-Steuerung (204) aktiviert, wenn die ermittelte Änderungsrate größer als ein Schwellenwert der Änderungsrate ist, der größer als Null ist.

4. Aktivierungssteuerung (206) nach einem der vorhergehenden Ansprüche, wobei die Aktivierungssteuerung so konfiguriert ist, dass sie die Aktivierung der Pitch-Steuerung (204) auf der Grundlage der ermittelten Größe der Schwingungsbewegung der Komponente (102, 103) steuert.

5. Aktivierungssteuerung (206) nach Anspruch 4, wobei die Aktivierungssteuerung so konfiguriert ist, dass sie die Pitch-Steuerung (204) aktiviert, wenn die bestimmte Größe der Schwingungsbewegung der Komponente (102, 103) einen Schwellenwert der Größe größer als Null überschreitet; optional, wobei die Aktivierungssteuerung so konfiguriert ist, dass sie die Pitch-Steuerung deaktiviert, wenn die bestimmte Größe der Schwingungsbewegung der Komponente kleiner als ein zweiter Schwellenwert der Größe ist; ferner optional, wobei der zweite Schwellenwert der Größe kleiner oder gleich dem Schwellenwert der Größe ist.

6. Aktivierungssteuerung (206) nach Anspruch 5, wobei der Schwellenwert der Größe davon abhängt, ob die Windturbine (10) in einem Volllastbereich oder in einem Teillastbereich einer Leistungskurve der Windturbine arbeitet; optional wobei der Schwellenwert der Größe, wenn die Windturbine im Teillastbereich arbeitet, größer ist als wenn sie im Volllastbereich arbeitet.

7. Aktivierungssteuerung nach Anspruch 1, wobei die Aktivierungssteuerung (206) so konfiguriert ist, dass sie die Pitch-Steuerung (204) aktiviert, wenn eine vorhergesagte Größe größer als ein definierter Schwellenwert für die vorhergesagte Größe ist, wobei die vorhergesagte Größe die Summe der bestimmten Größe und der bestimmten Änderungsrate der Größe multipliziert mit einem konstanten Wert ist.

8. Aktivierungssteuerung (206) nach einem der vorhergehenden Ansprüche, wobei die Aktivierungssteuerung so konfiguriert ist, dass sie Frequenzanteile im empfangenen Sensorsignal (208) um eine definierte Zielfrequenz herum isoliert, wobei die ermittelte Größe eine Größe einer Schwingungsbewegung um die definierte Zielfrequenz ist, wobei die Größe auf der Grundlage der isolierten Frequenzanteile bestimmt wird; optional, wobei die definierte Zielfrequenz nP ist, wobei n eine positive ganze Zahl ist.

9. Aktivierungssteuerung (206) nach Anspruch 8, wobei die Aktivierungssteuerung zur Isolierung der Frequenzanteile konfiguriert ist, zum:
Erzeugen, auf Basis des empfangenen Sensorsignals (208), eines Paars zueinander orthogonaler Komponenten, basierend auf der definierten Zielfrequenz; und
Anwenden eines oder mehrerer Filter auf jedes der Paare zueinander orthogonaler Komponenten, um die Frequenzanteile um die definierte Zielfrequenz zu isolieren,
wobei die Größe der Schwingungsbewegung auf Basis des gefilterten Paares zueinander orthogonaler Komponenten bestimmt wird.

10. Aktivierungssteuerung (206) nach Anspruch 9, wobei das Paar zueinander orthogonaler Komponenten wie folgt erzeugt wird: $\left[\begin{matrix}D \\ Q\end{matrix}\right] = \left[\begin{matrix}cos \left({Ω}_{rot}t\right) \\ sin \left({Ω}_{rot}t\right)\end{matrix}\right] A$ wobei *D* und Q das Paar zueinander orthogonaler Komponenten sind, *t* die Zeit, *A* das empfangene Sensorsignal und Ω*ᵣₒₜ* die definierte Zielfrequenz ist; optional wobei die Aktivierungssteuerung so konfiguriert ist, dass sie einen Filter auf die ermittelte Größe anwendet, bevor die Änderungsrate der Größe bestimmt wird, wobei der Filter ein Tiefpassfilter oder ein Kerbfilter bei 2Ω*ᵣₒₜ* ist.

11. Aktivierungssteuerung (206) nach einem der vorhergehenden Ansprüche, wobei das empfangene Sensorsignal von dem mindestens einen Sensorsignal ein Beschleunigungssignal von einem Beschleunigungssensor an der Spitze eines Turms (102) der Windturbine (10) oder in einer Gondel (103) der Windturbine ist, wobei die Größe der Schwingungsbewegung der Komponente die Größe der Vorwärts-Rückwärts-Schwingung des Turms oder der Gondel ist, und wobei die Pitch-Steuerung (204) eine kollektive Pitch-Steuerung zum Einstellen des kollektiven Pitches der Mehrzahl von Rotorblättern (106) ist.

12. Aktivierungssteuerung (206) nach Anspruch 11, wenn abhängig von Anspruch 8, wobei die Windturbine (10) drei Rotorblätter (106) umfasst und wobei die definierte Zielfrequenz 3P ist; optional, wobei es sich bei der Windturbine um eine Offshore-Windturbine handelt, bei welcher der Turm (102) mit einer schwimmenden Plattform (12) gekoppelt ist.

13. Aktivierungssteuerung (206) nach einem der Ansprüche 8 bis 10, wobei das empfangene Sensorsignal von dem mindestens einen Sensorsignal ein Beschleunigungssignal von einem Beschleunigungssensor an der Spitze eines Turms (102) der Windturbine (10) oder in einer Gondel (103) der Windturbine ist, wobei die Größe der Schwingungsbewegung der Komponente die Größe der Seitwärtsschwingung des Turms oder der Gondel ist, wobei die Windturbine drei Rotorblätter umfasst, wobei die definierte Zielfrequenz 6 P ist und wobei die Pitch-Steuerung (204) eine kollektive Pitch-Steuerung zum Einstellen des kollektiven Pitches der Mehrzahl von Rotorblättern (106) ist.

14. Windturbine (10), umfassend eine Aktivierungssteuerung (206) nach einem der vorhergehenden Ansprüche.

15. Verfahren für eine Windturbine (10), die eine Mehrzahl von Rotorblättern (106) aufweist, wobei das Verfahren zum Steuern der Aktivierung einer Pitch-Steuerung (204) für die Steuerung eines kollektiven Pitches der Rotorblätter (106) dient, wobei das Verfahren umfasst:
Empfangen eines Sensorsignals (208) von mindestens einem Sensor der Windturbine, das auf eine Schwingungsbewegung einer Komponente (102, 103) der Windturbine hinweist;
Bestimmen einer Größe der Schwingungsbewegung der Komponente auf Basis des empfangenen Sensorsignals; **dadurch gekennzeichnet, dass** das Verfahren ferner Folgendes umfasst:
Bestimmen einer Änderungsrate der Größe der Schwingungsbewegung auf Basis der bestimmten Größe; und,
Steuern der Aktivierung der Pitch-Steuerung auf Basis der bestimmten Änderungsrate der Größe der Schwingungsbewegung.

## Revendications

1. Dispositif de commande d'activation (206) pour une éolienne (10) présentant une pluralité de pales de rotor (106), le dispositif de commande d'activation étant destiné à commander l'activation d'un dispositif de commande de calage (204) qui est destiné à commander le calage des pales de rotor, le dispositif de commande d'activation étant configuré pour :
recevoir un signal de capteur (208), provenant d'au moins un capteur de l'éolienne, indiquant un mouvement oscillatoire d'un composant (102, 103) de l'éolienne ;
déterminer, sur la base du signal de capteur reçu, l'amplitude du mouvement oscillatoire du composant ; **caractérisé en ce que** le dispositif de commande d'activation est en outre configuré pour :
déterminer, sur la base de l'amplitude déterminée, un taux de variation de l'amplitude du mouvement oscillatoire ; et,
commander l'activation du dispositif de commande de calage en fonction du taux de variation déterminé de l'amplitude du mouvement oscillatoire.

2. Dispositif de commande d'activation (206) selon la revendication 1, dans lequel le dispositif de commande d'activation est configuré pour activer le dispositif de commande de calage (204) si le taux de variation déterminé est supérieur à zéro ; facultativement, dans lequel le dispositif de commande d'activation est configuré pour désactiver le dispositif de commande de calage si le taux de variation déterminé est inférieur à zéro.

3. Dispositif de commande d'activation (206) selon la revendication 2, dans lequel le dispositif de commande d'activation est configuré pour activer le dispositif de commande de calage (204) si le taux de variation déterminé est supérieur à une valeur de taux de variation seuil supérieure à zéro.

4. Dispositif de commande d'activation (206) selon une quelconque revendication précédente, le dispositif de commande d'activation étant configuré pour commander l'activation du dispositif de commande de calage (204) en fonction de l'amplitude déterminée du mouvement oscillatoire du composant (102, 103).

5. Dispositif de commande d'activation (206) selon la revendication 4, dans lequel le dispositif de commande d'activation est configuré pour activer le dispositif de commande de calage (204) si l'amplitude déterminée du mouvement oscillatoire du composant (102, 103) est supérieure à une valeur d'amplitude seuil supérieure à zéro ; facultativement, dans lequel le dispositif de commande d'activation est configuré pour désactiver le dispositif de commande de calage si l'amplitude déterminée du mouvement oscillatoire du composant est inférieure à une seconde valeur d'amplitude seuil ; facultativement encore, dans lequel la seconde valeur d'amplitude seuil est inférieure ou égale à la valeur d'amplitude seuil.

6. Dispositif de commande d'activation (206) selon la revendication 5, dans lequel la valeur d'amplitude seuil dépend du fait que l'éolienne (10) fonctionne dans une région de pleine charge ou dans une région de charge partielle de la courbe de puissance de l'éolienne ; facultativement, dans lequel la valeur d'amplitude seuil est plus élevée lorsque l'éolienne fonctionne dans la région de charge partielle que dans la région de pleine charge.

7. Dispositif de commande d'activation selon la revendication 1, dans lequel le dispositif de commande d'activation (206) est configuré pour activer le dispositif de commande de calage (204) si une amplitude prédite est supérieure à une valeur d'amplitude seuil prédite définie, dans lequel l'amplitude prédite est une somme de l'amplitude déterminée et du taux de variation déterminé de l'amplitude multiplié par une valeur constante.

8. Dispositif de commande d'activation (206) selon une quelconque revendication précédente, le dispositif de commande d'activation étant configuré pour isoler le contenu fréquentiel du signal de capteur reçu (208) autour d'une fréquence cible définie, dans lequel l'amplitude déterminée est une amplitude de mouvement oscillatoire autour de la fréquence cible définie, l'amplitude étant déterminée sur la base du contenu fréquentiel isolé ; facultativement, dans lequel la fréquence cible définie est nP, où n est un entier positif.

9. Dispositif de commande d'activation (206) selon la revendication 8, dans lequel pour isoler le contenu fréquentiel, le dispositif de commande d'activation est configuré pour :
générer, sur la base du signal de capteur reçu (208), une paire de composants mutuellement orthogonaux basés sur la fréquence cible définie ; et,
appliquer un ou plusieurs filtres à chacun de la paire de composants mutuellement orthogonaux afin d'isoler le contenu fréquentiel autour de la fréquence cible définie,
dans lequel l'amplitude du mouvement oscillatoire est déterminée sur la base de la paire filtrée de composants mutuellement orthogonaux.

10. Dispositif de commande d'activation (206) selon la revendication 9, dans lequel la paire de composants mutuellement orthogonaux est générée selon : $\left[\begin{matrix}D \\ Q\end{matrix}\right] = \left[\begin{matrix}cos \left({Ω}_{rot}t\right) \\ sin \left({Ω}_{rot}t\right)\end{matrix}\right] A$ où *D* et Q sont la paire de composants mutuellement orthogonaux, *t* est le temps, *A* est le signal de capteur reçu et Ω*ᵣₒₜ* est la fréquence cible définie ; facultativement dans lequel le dispositif de commande d'activation est configuré pour appliquer un filtre à l'amplitude déterminée avant de déterminer le taux de variation de l'amplitude, dans lequel le filtre est : un filtre passe-bas ; ou un filtre coupe-bande à 2Ω*ᵣₒₜ*.

11. Dispositif de commande d'activation (206) selon une quelconque revendication précédente, dans lequel le signal de capteur reçu de l'au moins un signal de capteur est un signal d'accélération provenant d'un capteur d'accélération situé au sommet d'une tour (102) de l'éolienne (10) ou dans une nacelle (103) de l'éolienne, dans lequel l'amplitude du mouvement oscillatoire du composant est l'amplitude de l'oscillation avant-arrière de la tour ou de la nacelle, et dans lequel le dispositif de commande de calage (204) est un dispositif de commande de calage collectif pour ajuster le calage collectif de la pluralité de pales de rotor (106).

12. Dispositif de commande d'activation (206) selon la revendication 11 lorsqu'il dépend de la revendication 8, dans lequel l'éolienne (10) comprend trois pales de rotor (106), et dans lequel la fréquence cible définie est 3P ; facultativement, dans lequel l'éolienne est une éolienne en mer dans laquelle la tour (102) est couplée à une plateforme flottante (12).

13. Dispositif de commande d'activation (206) selon l'une quelconque des revendications 8 à 10, dans lequel le signal de capteur reçu de l'au moins un signal de capteur est un signal d'accélération provenant d'un capteur d'accélération situé au sommet d'une tour (102) de l'éolienne (10) ou dans une nacelle (103) de l'éolienne, dans lequel l'amplitude du mouvement oscillatoire du composant est l'amplitude de l'oscillation latérale de la tour ou de la nacelle, dans lequel l'éolienne comprend trois pales de rotor, dans lequel la fréquence cible définie est 6 P, et dans lequel le dispositif de commande de calage (204) est un dispositif de commande de calage collectif pour ajuster le calage collectif de la pluralité de pales de rotor (106).

14. Éolienne (10) comprenant un dispositif de commande d'activation (206) selon une quelconque revendication précédente.

15. Procédé pour une éolienne (10) présentant une pluralité de pales de rotor (106), le procédé étant destiné à commander l'activation d'un dispositif de commande de calage (204) qui est destiné à commander le calage des pales de rotor (106), le procédé comprenant :
la réception d'un signal de capteur (208), provenant d'au moins un capteur de l'éolienne, indiquant un mouvement oscillatoire d'un composant (102, 103) de l'éolienne ;
la détermination, sur la base du signal de capteur reçu, de l'amplitude du mouvement oscillatoire du composant ; **caractérisé en ce que** le procédé comprend en outre :
la détermination, sur la base de l'amplitude déterminée, d'un taux de variation de l'amplitude du mouvement oscillatoire ; et,
la commande de l'activation du dispositif de commande de calage en fonction du taux de variation déterminé de l'amplitude du mouvement oscillatoire.
